# EUROPÄISCHE PATENTSCHRIFT

(11) **EP 3 450 647 B1**
(45) Veröffentlichungstag und Bekanntmachung des Hinweises auf die Patenterteilung: **11.08.2021**
(21) Anmeldenummer: 17188934.8
(22) Anmeldetag: 01.09.2017
(51) Int. Cl.: E04D 3/36, F16B 25/00, F16B 25/10

(54) **BEFESTIGER FÜR ISOLATIONSMATERIAL**
FASTENER FOR INSULATION MATERIAL
DISPOSITIF DE FIXATION POUR MATÉRIAU D'ISOLATION

(43) Veröffentlichungstag der Anmeldung: 06.03.2019
(73) Patentinhaber: SFS Intec Holding AG, 9435 Heerbrugg (CH)
(72) Erfinder: GASSER, Daniel, 9444 Diepoldsau (CH); HEINZMANN, Thomas, 9008 St. Gallen (CH)

(56) Entgegenhaltungen:
- EP-A1- 2 366 843
- EP-A1- 2 930 378
- EP-B1- 1 235 988
- WO-A1-89/02504
- DE-U1- 8 908 118

## Beschreibung

Die vorliegende Erfindung befasst sich mit einer Befestigungsanordnung zur Sicherung von Isolationsschichten, insbesondere auf Dächern.

### HINTERGRUND

Um aktuellen Vorschriften zur Isolation von Flachdachkonstruktionen zu genügen, müssen je nach Klima auf einer tragenden Unterkonstruktion verschiedene Lagen von Isolationsmaterial rationell verarbeitet werden. Üblicherweise besteht die Abdecklage über den Isolationsschichten aus einer Dachbahn bzw. Kunststofffolie, die Unterkonstruktion häufig aus Trapezblechen. Zur Befestigung ist es bekannt, eine Kombination von Schraube und Tülle zu verwenden. Unter einer Tülle wird hierbei üblicherweise eine rohrförmige Hülse verstanden mit einer Verengung an einem Ende und einer radial abstehenden Kopfverbreiterung am anderen. Diese Kopfverbreiterung hat die Form einer überdimensionierten Unterlagscheibe, die im montierten Zustand auf der Dachbahn aufliegt und die Zuglasten des Befestigers flächig verteilt. Der Innendurchmesser des Schaftes der Tülle ist so bemessen, dass der Befestiger mitsamt Kopf in die Tülle eingeführt werden kann - die Tülle wirkt also auch als Verlängerung des Befestigers. Bei der Montage wird der Befestiger in der Tülle durch die Isolationsschichten in die Unterkonstruktion eingebohrt. Der Kopf des Befestigers schlägt beim Eindrehvorgang an der Spitzenverengung der Tülle an und sorgt je nach Setztiefe des Befestigers für die Zuglast an der Tülle. Bei Unterkonstruktionen wie Holz oder Beton lassen sich u.U. durch Rückdrehen des Befestigers die Zuglasten kontrollieren, eine echte Regulierung unabhängig von der Verankerung erlaubt dies jedoch nicht.

Bei Blechunterkonstruktionen besteht darüber hinaus das Problem, dass der Eingriff des Befestigers im Untergrund (der Unterkonstruktion) sehr schmal ist und durch das Gewinde stark beansprucht wird. Eine Justage durch Vor- und Zurückdrehen des Befestigers kann die Auszugskräfte des Befestigers negativ beeinflussen.

### STAND DER TECHNIK

Um bei der Befestigung von Isolationsschichten auf Stahlblechkonstruktionen die Justierbarkeit zu verbessern, schlägt die EP 2 366 843 daher vor, die Kombination von Tülle und Befestiger um eine Sechskantmutter auf dem Gewinde des Befestigers zu ergänzen. Die Aussenform der Sechskantmutter korrespondiert hierbei mit der Geometrie des Innenraums des Tüllenschafts. Die Mutter ist entlang der Tüllenachse daher längsverschieblich, die Rotation von Mutter und Tülle ist jedoch gebunden. Dadurch kann der Befestiger auf der vorgesehenen Setztiefe verankert werden und anschliessend, durch Verdrehen der Tülle, die Verankerungstiefe der Tülle reguliert werden. Nachteilig ist dabei, dass die Kopfverbreiterung der Tülle speziell in der Endmontagephase eine unerwünschte (Dreh)Mitnahmebewegung auf die Folie ausübt.

Die vorliegende Erfindung hat sich daher zum Ziel gesetzt, den Stand der Technik dahingehend zu verbessern, dass die Einstellbarkeit der Setztiefe der Tülle verbessert wird, insbesondere zu verhindern, dass die endgültige Festlegung der Einbautiefe der Tülle (nach dem Setzen des Befestigers) allein durch Verdrehen der Tülle erzielt werden kann.

Dies wird mit einer Befestigungsanordnung gemäss Anspruch 1 erzielt Ein Verfahren zur Montage einer solchen Befestigungsvorrichtung ist ab Anspruch 11 beschrieben.

### BESCHREIBUNG DER ERFINDUNG

Die Erfindung verwendet eine speziell ausgeführte Befestigungsanordnung aus einer Tülle und einem Befestiger mit einer Mutter.

Dabei umfasst die Befestigungsanordnung eine Tülle, die als im Wesentlichen zylindrische Hülse mit einem Kopfteil, einem hohlzylindrischem Schaft und einer konischen Spitze dargestellt werden kann sowie einen Befestiger mit einem Kopf, einem anschliessenden Schaft und einer daran anschliessenden Spitze. Der Schaft weist einen ersten Gewindeabschnitt nahe der Spitze und einen zweiten Gewindeabschnitt nahe dem Kopf auf. Auf dem zweiten Gewindeabschnitt des Befestigers ist eine Mutter anbringbar. Ferner ist ein Anschlag zwischen dem ersten und zweiten Gewindeabschnitt angeordnet. Dieser Anschlag dient, wie weiter unten erläutert wird, als Tiefenbegrenzer beim Eintreiben des Befestigers. Kennzeichnend ist, dass der erste Gewindeabschnitt als Rechtsgewinde und der zweite Gewindeabschnitt als Linksgewinde ausgeführt ist oder alternativ bzw. technisch äquivalent der erste Gewindeabschnitt als Linksgewinde und der zweite Gewindeabschnitt als Rechtsgewinde ausgeführt ist.
Bezüglich der Mutter gilt, dass sie eine zylindrische Form um eine zentrale Rotationsachse hat und an einem Längsende einen Kraftangriff aufweist. Durch das Einführen des Befestigers mit der Mutter in die Tülle ist ein Kraftangriff radial aussen nicht sinnvoll. Daher wird er bevorzugt an das zylindrische Vorderende verlegt und weist somit im vormontierten Zustand von der Tüllenspitze weg.

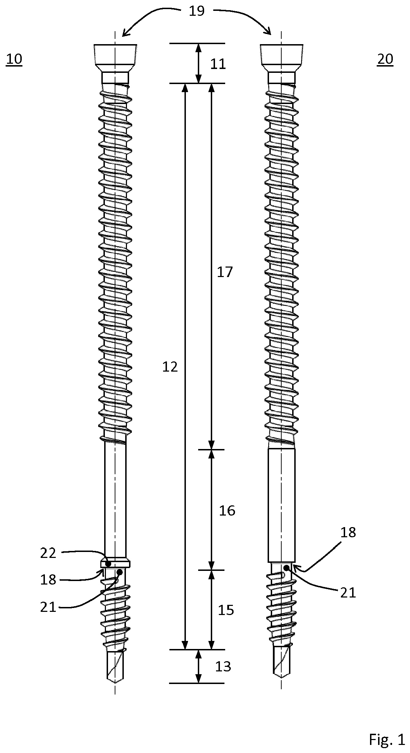

Der vorerwähnte Anschlag kann als Teil eines ringförmigen Wulstes realisiert werden, dessen zur Spitze gewandte Seite diese Funktion erfüllt. Ebenso möglich ist es, den Anschlag als Teil eines gewindefreien Abschnittes auszuführen, wobei dessen Aussendurchmesser (Kerndurchmesser) verbreitert ausgeführt ist. Alternativ kann auch der zur Spitze weisende Auslauf des zweiten Gewindeabschnitts die Funktion des Anschlags übernehmen. Mit anderen Worten, sowohl der Wulst wie auch ein gewindefreier Abschnitt stellen an ihrer der Spitze zugewandten Seite eine Stufe, eine radial vorkragende Anschlagfläche zur Verfügung. Dieser Anschlag dient nur als Tiefenbegrenzung für den Setzvorgang in der Unterkonstruktion. Nachdem der zweite Gewindeabschnitt gegensinnig zum ersten Gewindeabschnitt angelegt ist, greift das Gewinde im Abschnitt nicht in das von der Spitze dimensionierte Loch und stellt somit funktionell ebenfalls eine Tiefenbegrenzung dar. In Figur 1 sind zwei Varianten des Befestigers mit eigenen Bezugszeichen 10, 20 versehen.

In einer weiteren Ausbildungsform wird zwischen dem ersten Gewindeabschnitt und dem Anschlag ein gewindefreier Schaftbereich angeordnet. Beim Eindrehen des Befestigers in einen Stahlblechuntergrund wird durch den ersten Gewindeabschnitt das Stahlblech bis zum Anschlag gezogen und bleibt im gewindefreien Abschnitt zwischen dem Anschlag und dem Gewindeauslauf definiert gehalten. Ein weiteres Eindringen des Befestigers in den Untergrund wird so verhindert, der Befestiger kann sich dabei frei drehen.
Für den Einsatzbereich in Stahlblech ist es dabei vorteilhaft, die Spitze des Befestigers als Bohrspitze auszuführen, die sich ohne Vorbohren selbst in das Material einsenken kann.

In einer weiteren Ausführungsvariante kann die die Steigung des Gewindes im ersten Gewindeabschnitt von der Steigung im zweiten Gewindeabschnitt unterschiedlich gewählt werden. Je nach Auslegung kann die Steigung grösser oder kleiner gewählt werden.

Die Tülle folgt in ihrer Grundform dem Stand der Technik, wobei die konische Spitze der Tülle über eine Durchtrittsöffnung verfügt, deren Durchmesser geringer ist als der Innendurchmesser des zylindrischen Innenraums des Schaftes. Die in den Figuren als Dₘₐₓ und Dₘᵢₙ bezeichneten Durchmesser sind also so gewählt, dass gilt Dₘₐₓ>Dₘᵢₙ. Der zylindrische Innenraum der Tülle und die Durchgangsöffnung verfügen dabei über eine gemeinsame Zentralachse. Dₘᵢₙ ist so gewählt, dass Spitze und Schaft eines Befestigers passieren können, nicht jedoch die Mutter.
Dies deswegen, weil der Übergangsbereich zwischen der zylindrischen Durchgangsöffnung und dem zylindrischen Innenraum bei der Tülle eine im Wesentlichen radialsymmetrische, ebene oder leicht konische Anschlagfläche bildet.

Bei der Tülle selbst wiederum kann der Kopfteil unterschiedlich ausgeführt sein. Er weist entweder eine flanschähnliche Form auf, die dazu ausgelegt ist, für eine aufsteckbare Lastverteilscheibe eine Haltefläche zu bilden. Diese Lastverteilscheibe kann aufgabenspezifisch in verschiedenen Materialien (Aluminium, Stahlblech, Kunststoff) ausgeführt sein mit unterschiedlichen Formen (kreisrund, oval, vieleckig) und Durchmessern. Alternativ kann der Kopf eine angeformte radiale Kopfverbreiterung aufweisen. Beide Ausführungen haben ihre spezifischen Vorteile, die sich aus dem Einsatzprofil ergeben.

In einer Variante kann die Mutter aus Kunststoff geformt und bei der Herstellung direkt auf einen Abschnitt zweiten Gewindeabschnittes aufgespritzt werden. Dazu wird der Befestiger in eine entsprechende Form einer Spritzgiessmaschine eingelegt und von der Form umschlossen. Vorteil ist, dass das erforderliche Gewinde der Mutter beim Spritzgiessvorgang entsteht und die Mutter zugleich korrekt ausgerichtet vormontiert ist.

Alternativ kann die Mutter als Blechformteil oder Tiefziehteil ausgeführt werden, das auf einen Abschnitt des zweiten Gewindeabschnittes aufgeschoben oder aufgeschraubt wird.

Das Montageverfahren für die oben beschriebene angesprochene Befestigungsvorrichtung kann mit folgenden Schritten beschrieben werden:
- Bereitstellen einer Befestigungsanordnung wie oben beschrieben, wobei der Befestiger mit der Mutter in den Innenraum der Tülle eingeführt ist. Diese Vormontage kann ab Werk erfolgen oder auf der Baustelle vorgenommen werden. Sinnvoll ist, die Kombination von Befestiger und Mutter vormontiert zu haben und vor Ort, je nach Dicke der zu verarbeitenden Isolationsschichten mit einer Tülle passender Länge durch Einstecken zu kombinieren.
- Eindrücken bzw. Eindrehen der Befestigungsanordnung in eine Gebäudehülle aus zumindest Abdeckfolie, Isolationsschicht und Tragblech (in Arbeitsrichtung betrachtet). Je nach Dicke und Zähigkeit kann dieses Eindrücken von Hand erfolgen. Die Spitze des Befestigers (Bohrspitze) reicht in der Regel aus, um die Kombination aus Befestiger und Tülle in Position zu bringen. Alternativ kann die Kombination auch auf eine Setzwerkzeug (Bohrmaschine mit Werkzeug) aufgesteckt werden und damit die Abdeckfolie und die Isolationsschicht mit motorischer Unterstützung durchdrungen werden.
- Im nächsten Schritt geht es um das Durchbohren des Tragbleches mit Hilfe der Bohrspitze, bis das Tragblech am Anschlag anschlägt und der Befestiger überdreht. Nach dem Bohrvorgang zieht der erste Gewindeabschnitt den Befestiger in das Tragblech bis es in den gewindefreien Schaftbereich gelangt und dort zwischen dem letzten Gewindegang und dem Anschlag gehalten wird.
- Sichern der Mutter mittels eines Werkzeuges gegen die (Mit-)Drehbewegung des Befestigers, wodurch die Mutter sich auf dem zweiten Gewindeabschnitt des Befestigers in Richtung Spitze bewegt.
- Nach dem Anschlagen der Mutter an der Anschlagfläche der Tülle und nimmt die Mutter während der weiteren Drehbewegung des Befestigers die Tülle mit und bewegt sie in Richtung Unterkonstruktion. Dabei dreht sich - im Gegensatz zum Stand der Technik - die Tülle selbst nicht zwangsläufig mit und vermeidet dadurch eine Belastung der Abdeckfolie.
- Bei Erreichen der geforderten Setztiefe der Tülle wird die Drehbewegung beendet.

Der Vorteil des Verfahrens besteht somit darin, dass während des gesamten Setzvorgangs der Befestigungsanordnung die Drehrichtung des Befestigers beibehalten werden kann. Die unterschiedliche Gewinderichtung zwischen erstem und zweitem Gewindeabschnitt erlaubt diese Vorgehensweise.

Wenn der erste Gewindeabschnitt als Rechtsgewinde und der zweite Gewindeabschnitt als Linksgewinde ausgeführt ist, ist die Drehrichtung beim Einbohren klassisch im Uhrzeigersinn. Wird der erste Gewindeabschnitt als Linksgewinde und der zweite Gewindeabschnitt als Rechtsgewinde ausgeführt, ist die Drehrichtung bei der Montage gegensinnig, also im Gegenuhrzeigersinn. Das Montageprinzip wie oben geschildert bleibt jedoch erhalten - die Drehrichtung des Setzgeräts wird in beiden Fällen beibehalten.

Um diese Einsatzweise zu erlauben, wird das zugehörige Werkzeug im Wesentlichen zweiteilig ausgeführt. Es umfasst einen zentralen Teil mit einer zylindrischen Stange, an deren einem Ende ein Werkzeugkopf angebracht ist, der mit einem Kraftangriff im Kopf des Befestigers bzw. zusammenwirken kann. Ferner umfasst das Werkzeug eine rohrförmige Hülse, die koaxial um die zylindrische Stange angeordnet werden kann und die an ihrem einem Ende so geformt ist, dass sie in den Kraftangriff der Mutter passt. Der Aussendurchmesser der rohrförmigen Hülse wird etwas kleiner als Dₘₐₓ des Innenraums der Tülle gewählt. Der freie Innendurchmesser der rohrförmigen Hülse ist ausreichend, um einen Befestiger mit verbundenem Antriebswerkzeug zum umschliessen.

Während der Setzung des Befestigers ist nur die zentrale Stange via Werkzeugkopf mit dem Kraftangriff im Kopf des Befestigers im Eingriff. Nach dem Setzen des Befestigers dreht der Befestiger leer weiter. Dann kann die Hülse am Schaft entlang in die Tülle geschoben werden, bis diese die (noch auf dem Befestiger) mitdrehende Mutter erreicht. Die Hülse greift in den Kraftangriff der Mutter ein und bremst sie ab bzw. hält sie fest. Durch das im Verglich zum ersten Gewindeabschnitt gegensinnige Gewinde auf dem zweiten Gewindeabschnitt wird bei beibehaltener Drehung des Befestigers die Mutter in Richtung Unterkonstruktion tiefer in die Tülle bewegt, bis diese, wie vorbeschrieben, an der Anschlagfläche der Tülle anschlägt.

Für den Bediener bedeutet dieses Vorgehen eine Zeitersparnis, weil er den Setz- und Justiervorgang in einem Arbeitsgang erledigen kann. Sobald der Befestiger seine Setztiefe erreicht hat, kann er ohne die Antriebsbewegung zu unterbrechen oder die Drehrichtung zu ändern durch Überschieben der Hülse den Justiervorgang beginnen und gezielt so steuern, dass die Tülle in der geforderten Tiefe gesetzt wird.

### BESCHREIBUNG DER FIGUREN

Die Erfindung wird nun mit Bezug auf die begleitenden Zeichnungen anhand besonders bevorzugter Ausführungsformen beispielhaft erläutert.
Figur 1 zeigt zwei Ausführungsvarianten eines Befestigers gemäss der Erfindung
Figur 2 zeigt zwei Varianten einer Tülle gemäss Erfindung
Figur 3 zeigt perspektivisch und in axialer Draufsicht eine erfindungsgemässe Mutter
Figuren 4 bis 5 zeigen verschiedene Phase eines Setzvorgangs einer erfindungsgemässen Befestigungsanordnung.

In Figur 1 wird unter den Bezugszeichen 10 sowie 20 jeweils eine Variante eines Befestigers gezeigt. Der Unterschied liegt nicht in der Funktion, sondern nur im technischen Design in einem Punkt. Die Hauptbestandteile sind in beiden Fällen ein Kopf 11, ein anschliessender Schaft 12 und eine (Bohr-)Spitze 13. Beide Varianten tragen auf dem Schaft zwei Gewindeabschnitte 15 und 17, von denen eines als Links-, das andere als Rechtsgewinde ausgeführt ist (bzw. umgekehrt). Dazwischen ist in Figur 1 ein gewindefreier Abschnitt 16 gezeigt. Anschlag 18 ist in der linken Variante 10 als separater Wulst 22 ausgeführt ist, in der Variante 2 als Vorsprung eines Schaftabschnittes. Funktionell leisten beide, wie weiter oben beschrieben, denselben Dienst. Der gewindefreie Schaftbereich 21 dient als Haltebereich für das Tragblech der Unterkonstruktion, sobald der Befestiger seine Endposition erreicht hat.

In Figur 1 ist der Kraftangriff 19 lediglich angedeutet als Innenangriff in der flanschähnlichen Verbreiterung des Kopfes 11. Alternativ kann auch ein Aussenangriff (e.g. als Vierkant, Sechskant) realisiert werden. Bevorzugt wird eine schlanke Ausführung, um die Funktionalität wie oben beschrieben, zu gewährleisten.

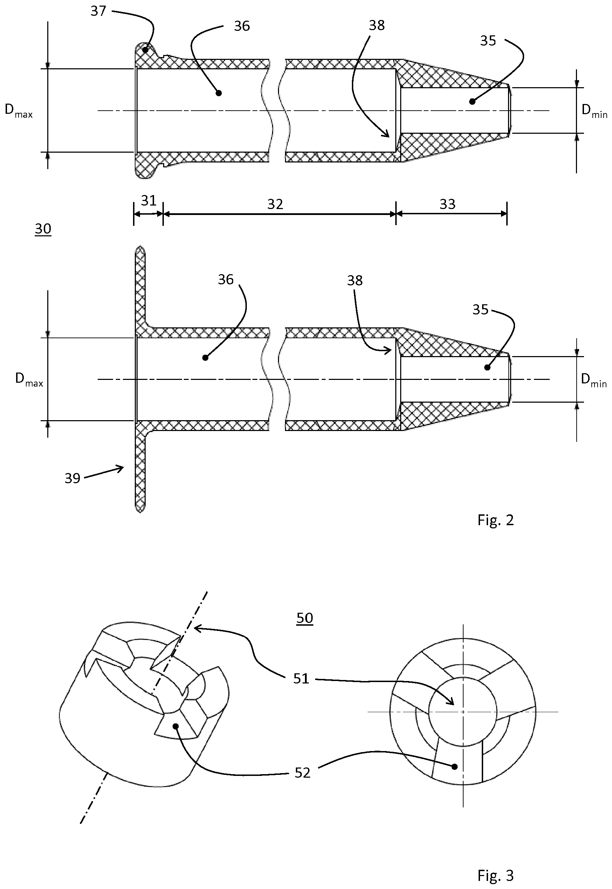

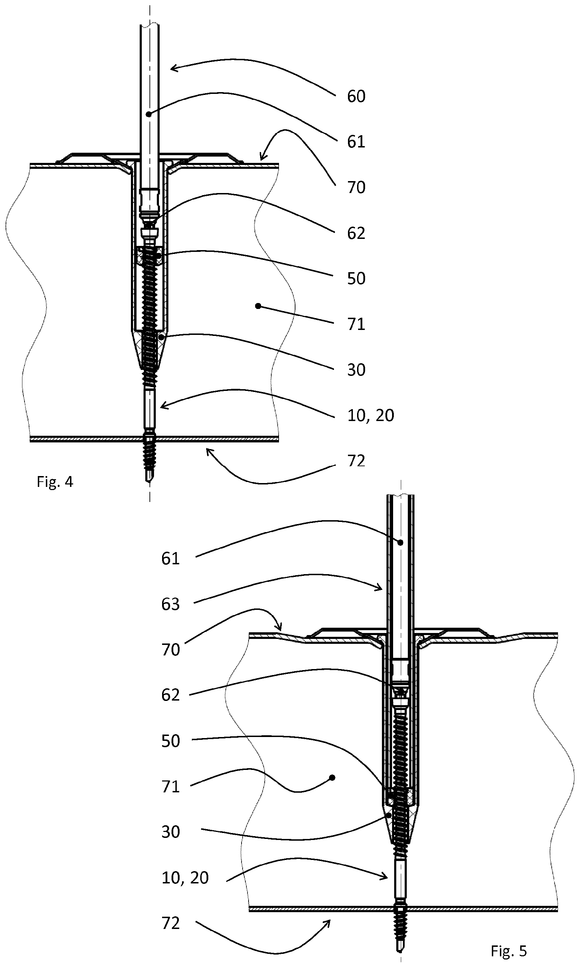

In Figur 2 ist in zwei Ausführungsvarianten eine Tülle 30 gezeigt. Sie besteht im Wesentlichen aus einem Kopf(teil) 31, einem zylindrischen bzw. hohlzylindrischen Schaft 32, an den wiederum eine sich konisch verjüngende Spitze 33 anschliesst. Der freie Innendurchmesser Dₘₐₓ von Kopfteil 31 und Schaft 32 ist koaxial um eine gemeinsame Zentralachse 41 angeordnet und ebenfalls (hohl)zylindrisch ausgelegt und so dimensioniert, dass der zylindrische Innenraum 36 ein Werkzeug 60 mit angesetztem Befestiger 10 bzw. 20 plus der oben beschriebenen Hülse 63 aufnehmen kann. Der Innenraum 36 geht über in eine zylindrische Durchgangsöffnung 35, der Übergang bildet dabei eine dem Tüllenkopf 31 zugewandte Anschlagfläche 38. Die obere Variante der Tülle 30 weist einen Flansch bzw. einen flanschähnlich geformten Kopf 37 auf. Er dient als Rand zum Halten einer aufzusteckenden bzw. aufsteckbaren Lastverteilscheibe. Figur 4 und 5 zeigen eine solche aufgesteckte Lastverteilscheibe in der Anwendung. Die Variante in Figur 2 unten ist mit einer Lastverteilscheibe 39 gezeigt, die integraler Teil der Tülle 30 ist. Diese Ausführungsform reduziert die Komplexität des Systems aus Befestiger 10, 20 mit Mutter 50, Tülle 30 und aufsteckbarer Lastverteilscheibe, hat aber den Nachteil der geringeren Flexibilität im Einsatz.

Figur 3 zeigt in Schrägansicht (links) und Draufsicht (rechts) eine Mutter 50. An ihrer im vormontierten Zustand zur Befestigerspitze 13 weisenden Ende ist ein Kraftangriff 52 angebracht, der mit dem Werkzeug 60 in der oben beschriebenen Weise zusammenwirken kann. Im vorliegenden Fall sind drei um 120° versetzte Aussparungen gezeigt, in die komplementäre Vorsprünge des Werkzeugs eingreifen können. Die Zentralachse 51 bildet dann auch die Zentralachse des Werkzeugs 60 bzw. der Hülse 63. Diese bevorzugte Ausführungsform ist nicht einschränkend, der Fachmann kann äquivalente Varianten nach seinem Fachwissen auslegen. Insbesondere können Varianten mit nur einer Aussparung, zwei Aussparungen (Versatz 180°) oder auch 4 Aussparungen (Versatz 90°) eingesetzt werden. Auch eine Stirnverzahnung ist möglich. Die Werkzeuge werden dazu komplementär ausgeführt.

Die Figuren 4 und 5 zeigen Momentaufnahmen aus dem Montageverfahren. In Figur 4 ist der Moment zu sehen, wo der Befestiger 10, 20 seine Einbautiefe erreicht hat und überdreht. Die zylindrische Stange 62 des Werkzeugs 60 steht via den Werkzeugkopf 62 mit dem Kopf des Befestigers 10, 20 im Eingriff. Die Mutter 50 befindet sich auf dem zweiten Gewindeabschnitt, ist aber noch nicht abgesenkt. Die Tülle 30 weist eine aufgesteckte Lastverteilscheibe auf. Die Isolationsschicht 71 liegt noch locker auf dem Tragblech 72 auf.

In Figur 5 ist der Moment gezeigt, wo die Montage fertiggestellt ist. Die rohrförmige Hülse ist über die zylindrische Stange 61 des Werkzeugs 60 so geschoben, dass die Hülse in den Kraftangriff der Mutter 50 eingreift. Während der Befestiger via Stange 61 weiter rotiert, bremst die Hülse 63 die Mutter 50 ab, wodurch diese beginnt in Richtung Befestigerspitze (in der Zeichnung nach unten) zu wandern. Dadurch wird die Tülle Richtung Tragblech 72 gezogen, was in der Figur 5 als leichte Verformung der Abdeckfolie 70 angedeutet ist. Unmittelbar danach kann das Werkzeug 60 samt Hülse abgezogen werden und die nächste Befestigungsanordnung gesetzt werden.

### BEZUGSZEICHENLISTE

- 10,20: Befestiger
- 11: Kopf
- 12: Schaft
- 13: Spitze
- 15: erster Gewindeabschnitt
- 16: gewindefreier (Schaft)Abschnitt
- 17: zweiter Gewindeabschnitt
- 18: Anschlag
- 19: Angriff, Drehmomentangriff, Kraftangriff
- 21: gewindefreier Schaftbereich, Halteabschnitt
- 22: Wulst

- 30: Tülle
- 31: Kopf(teil)
- 32: (hohl)(zylindrischer) Schaft
- 33: (konische) Spitze
- 35: (zylindrische) Durchgangsöffnung
- 36: (zylindrischer) Innenraum
- 37: Flansch, flanschähnlich geformter Kopf
- 38: Anschlagfläche
- 39: Lastverteilscheibe
- 41: Zentralachse der Tülle

- 50: Mutter
- 51: Rotationsachse
- 52: Kraftangriff

- 60: Werkzeug
- 61: zylindrische Stange
- 62: Werkzeugkopf
- 63: rohrförmige Hülse

- 70: Abdeckfolie,
- 71: Isolationsschicht
- 72: Tragblech der Unterkonstruktion

## Patentansprüche

1. Befestigungsanordnung umfassend
- eine Tülle (30), die als im Wesentlichen zylindrische Hülse mit einem Kopfteil (31), einem hohlzylindrischem Schaft (32) und einer konischen Spitze (33) ausgeführt ist,
- einen Befestiger (10, 20) mit einem Kopf (11), einem anschliessenden Schaft (12) und einer daran anschliessenden Spitze (13), sowie einer auf einem zweiten Gewindeabschnitt (17) des Befestigers (10) anbringbaren Mutter (50)
**dadurch gekennzeichnet, dass**
der Schaft (12) des Befestigers (10, 20) einen ersten Gewindeabschnitt (15) nahe der Spitze (13) und den zweiten Gewindeabschnitt (17) nahe dem Kopf (11) aufweist sowie einen Anschlag (18), angeordnet zwischen dem ersten (15) und zweiten (17) Gewindeabschnitt,
- wobei der erste Gewindeabschnitt (15) als Rechtsgewinde und der zweite Gewindeabschnitt (17) als Linksgewinde ausgeführt ist oder alternativ der erste Gewindeabschnitt (15) als Linksgewinde und der zweite Gewindeabschnitt (17) als Rechtsgewinde ausgeführt ist; und
- die Mutter (50) eine zylindrische Form um eine zentrale Rotationsachse (51) hat und an einem Längsende einen Kraftangriff (52) aufweist.

2. Befestigungsanordnung nach Anspruch 1, **dadurch gekennzeichnet, dass** der Anschlag (18) als Teil eines ringförmigen Wulstes (22) oder als Abschnitt mit vergrössertem Kerndurchmesser eines gewindefreien Abschnittes (16) ausgeführt ist oder durch den zur Spitze (13) weisenden Auslauf des zweiten Gewindeabschnitts (17) gebildet wird.

3. Befestigungsanordnung nach Anspruch 1 und/oder 2, **dadurch gekennzeichnet, dass** zwischen dem ersten (15) Gewindeabschnitt und dem Anschlag (18) eine gewindefreier Schaftbereich (21) angeordnet ist.

4. Befestigungsanordnung nach Anspruch 1 bis 3, **dadurch gekennzeichnet, dass** die Spitze (13) als Bohrspitze ausgeführt ist.

5. Befestigungsanordnung nach Anspruch 1 bis 4, **dadurch gekennzeichnet, dass** die Steigung des Gewindes im ersten Gewindeabschnitt (15) sich von der Steigung im zweiten Gewindeabschnitt (17) unterscheidet.

6. Befestigungsanordnung nach Anspruch 1-5, **dadurch gekennzeichnet, dass** die konische Spitze (33) der Tülle (30) über eine Durchtrittsöffnung (35) verfügt, deren Durchmesser geringer ist als der Innendurchmesser des zylindrischen Innenraums (36) des Schaftes (32) und dass der zylindrische Innenraum (36) und die Durchgangsöffnung (35) eine gemeinsame Zentralachse (41) haben.

7. Befestigungsanordnung nach Anspruch 1-6, **dadurch gekennzeichnet, dass** der Übergangsbereich zwischen der zylindrischen Durchgangsöffnung (35) und dem zylindrischen Innenraum (35) eine im wesentlichen radialsymmetrische, ebene oder leicht konische Anschlagfläche (38) bildet.

8. Befestigungsanordnung nach Anspruch 1-7, **dadurch gekennzeichnet, dass** der Kopf (31) der Tülle (30)
- entweder eine flanschähnliche Form (37) aufweist, dazu ausgelegt, um für eine Lastverteilscheibe (39) eine Haltefläche zu bilden
- oder dass der Kopf eine angeformte radiale Kopfverbreiterung aufweist

9. Befestigungsanordnung nach Anspruch 1-8, **dadurch gekennzeichnet, dass** die Mutter (50) aus Kunststoff geformt wird und bei der Herstellung direkt auf einen Abschnitt zweiten Gewindeabschnittes (17) aufgespritzt wird.

10. Befestigungsanordnung nach Anspruch 1-8, **dadurch gekennzeichnet, dass** die Mutter (50) als Blechformteil oder Tiefziehteil ausgeführt wird und auf einen Abschnitt zweiten Gewindeabschnittes (17) aufgeschoben oder aufgeschraubt wird.

11. Verfahren zur Montage einer Befestigungsanordnung, mit folgenden Schritten:
- Bereitstellen einer Befestigungsanordnung nach Anspruch 1 bis 10, wobei der Befestiger (10, 20) mit der Mutter (50) in den Innenraum (36) der Tülle (30) eingeführt ist
- Eindrücken bzw. Eindrehen der Befestigungsanordnung in eine Gebäudehülle aus zumindest Abdeckfolie (70), Isolationsschicht (71) und Tragblech (72) (in Arbeitsrichtung betrachtet),
- Durchbohren des Tragbleches (72) mit Hilfe der Bohrspitze bis das Tragblech (72) am Anschlag (18) anschlägt und der Befestiger (10, 20) überdreht
- Sichern der Mutter (50) mittels eines Werkzeuges gegen die Drehbewegung des Befestigers, wodurch die Mutter (50) sich auf dem zweiten Gewindeabschnitt (17) des Befestigers (10) in Richtung Spitze (13) bewegt
- Anschlagen der Mutter (50) an der Anschlagfläche (38) der Tülle (30) und
dadurch Mitnahme der Tülle durch die Mutter (50) während der weiteren Drehbewegung des Befestigers (10)
- Beenden der Drehbewegung bei Erreichen der Setztiefe der Tülle (30)

12. Verfahren nach Anspruch 11, **dadurch gekennzeichnet, dass** während des gesamten Setzvorgangs der Befestigungsanordnung die Antriebsrichtung des Befestigers (10, 20) beibehalten wird.

## Claims

1. A fastening arrangement, comprising
- a grommet (30) formed as a substantially cylindrical sleeve having a head part (31), a hollow cylindrical shaft (32) and a conical tip (33),
- a fastener (10, 20) having a head (11), an adjoining shaft (12) and a tip (13) adjoining thereto, and a nut (50) that can be fitted on a second thread section (17) of the fastener (10),
**characterized in that**
the shaft (12) of the fastener (10, 20) has a first section (15) close to the tip (13) and the second thread section (17) close to the head (11), and a stop (18) arranged between the first (15) and the second (17) thread section,
- wherein the first thread section (15) is formed as a right-hand thread and the second thread section (17) as a left-hand thread, or alternatively, the first thread section (15) is formed as a left-hand thread and the second thread section (17) as a right-hand thread; and
- the nut (50) has a cylindrical shape about a central axis of rotation (51) and has a force engagement means (52) at one longitudinal end.

2. The fastening arrangement according to claim 1, **characterized in that** the stop (18) is formed as part of a ring-shaped bead (22) or as a section with an enlarged core diameter of a thread-free section (16) or is formed by the runout of the second thread section (17) facing the tip (13).

3. The fastening arrangement according to claim 1 and/or 2, **characterized in that** a thread-free shaft section (21) is arranged between the first (15) thread section and the stop (18).

4. The fastening arrangement according to claims 1 to 3, **characterized in that** the tip (13) is formed as a drill tip.

5. The fastening arrangement according to claims 1 to 4, **characterized in that** the pitch of the thread in the first thread section (15) is different from the pitch in the second thread section (17).

6. The fastening arrangement according to claims 1 to 5, **characterized in that** the conical tip (33) of the grommet (30) has a passage opening (35) having a diameter that is smaller than the inner diameter of the cylindrical inner space (36) of the shaft (32), and **in that** the cylindrical inner space (36) and the passage opening (35) have a common central axis (41).

7. The fastening arrangement according to claims 1 to 6, **characterized in that** the transition region between the cylindrical passage opening (35) and the cylindrical inner space (35) forms a substantially radially symmetrical, planar or slightly conical stop surface (38).

8. The fastening arrangement according to claims 1 to 7, **characterized in that** the head (31) of the grommet (30)
- either has a flange-like shape (37) designed to form a holding surface for a load distribution disk (39)
- or that the head has an integral radial head widening.

9. The fastening arrangement according to claims 1 to 8, **characterized in that** the nut (50) is molded from plastic and is injection-molded directly onto a section of the second thread section (17) during manufacture.

10. The fastening arrangement according to claims 1 to 8, **characterized in that** the nut (50) is formed as a sheet-metal molding or deep-drawn part and is slid or screwed onto a section of the second thread section (17).

11. A method for mounting a fastening arrangement, comprising the following steps:
- providing a fastening arrangement according to claims 1 to 10, wherein the fastener (10, 20) with the nut (50) is introduced into the inner space (36) of the grommet (30),
- pushing or screwing the fastening arrangement into a building envelope comprising at least a cover foil (70), an insulation layer (71) and a support sheet (72) (viewed in working direction),
- drilling through the support sheet (72) with the aid of the drill tip until the support sheet (72) abuts against the stop (18) and the fastener (10, 20) overwinds,
- securing the nut (50) by means of a tool against the rotational movement of the fastener, as a result of which the nut (50) moves on the second thread section (17) of the fastener (10) towards the tip (13),
- abutting the nut (50) against the stop surface (38) of the grommet (30) and thereby driving the grommet by the nut (50) during the further rotational movement of the fastener (10),
- ending the rotational movement upon reaching the placing depth of the grommet (30).

12. The method according to claim 11, **characterized in that** the driving direction of the fastener (10, 20) is maintained throughout the entire placement process of the fastening arrangement.

## Revendications

1. Système de fixation comprenant
- une douille (30), qui est exécutée sous la forme d'un manchon pour l'essentiel cylindrique avec une partie de tête (31), une queue cylindrique creuse (32) et une pointe conique (33),
- un élément de fixation (10, 20) avec une tête (11), une queue qui suit (12) et une pointe qui y est raccordée (13), ainsi qu'un écrou (50) pouvant être monté sur une deuxième section filetée (17) de l'élément de fixation (10),
**caractérisé en ce que**
la queue (12) de l'élément de fixation (10, 20) comporte une première section filetée (15) près de la pointe (13) et la deuxième section filetée (17) près de la tête (11), ainsi qu'une butée (18), disposée entre la première (15) et la deuxième (17) section filetée,
- sachant que la première section filetée (15) est exécutée sous la forme d'un filetage à droite et la deuxième section filetée (17) sous la forme d'un filetage à gauche ou alternativement la première section filetée (15) est exécutée sous la forme d'un filetage à gauche et la deuxième section filetée (17) sous la forme d'un filetage à droite, et
- l'écrou (50) a une forme cylindrique autour d'un axe de rotation central (51) et comporte une prise de force (52) à une extrémité longitudinale.

2. Système de fixation selon la revendication 1, **caractérisé en ce que** la butée (18) est exécutée sous la forme d'une partie d'un bourrelet annulaire (22) ou d'une section avec diamètre de noyau agrandi d'une section sans filetage (16) ou est formée par la sortie tournée vers la pointe (13) de la deuxième section filetée (17).

3. Système de fixation selon la revendication 1 et/ou 2, **caractérisé en ce qu'**une zone de queue sans filetage (21) est disposée entre la première section filetée (15) et la butée (18).

4. Système de fixation selon les revendications 1 à 3, **caractérisé en ce que** la pointe (13) est exécutée comme pointe de perçage.

5. Système de fixation selon les revendications 1 à 4, **caractérisé en ce que** le pas du filetage dans la première section filetée (15) est différent du pas dans la deuxième section filetée (17).

6. Système de fixation selon les revendications 1 à 5, **caractérisé en ce que** la pointe conique (33) de la douille (30) dispose d'une ouverture de passage (35), dont le diamètre est plus faible que le diamètre intérieur de l'espace intérieur cylindrique (36) de la queue (32) et **en ce que** l'espace intérieur cylindrique (36) et l'ouverture de passage (35) possèdent un axe central commun (41) .

7. Système de fixation selon les revendications 1 à 6, **caractérisé en ce que** la zone de transition entre l'ouverture de passage cylindrique (35) et l'espace intérieur cylindrique (35) forment une surface de butée (38) pour l'essentiel radialement symétrique, plane ou légèrement conique.

8. Système de fixation selon les revendications 1 à 7, **caractérisé en ce que** la tête (31) de la douille (30)
- comporte soit une forme analogue à une bride (37), conçue pour former une surface de fixation pour une rondelle de répartition de charge (39),
- soit que la tête comporte un élargissement de tête radial conformé.

9. Système de fixation selon les revendications 1 à 8, **caractérisé en ce que** l'écrou (50) est moulé en matière plastique et directement moulé par injection sur une section de la deuxième section filetée (17) lors de la fabrication.

10. Système de fixation selon les revendications 1 à 8, **caractérisé en ce que** l'écrou (50) est exécuté sous la forme d'une pièce formée en tôle ou d'une pièce emboutie et est enfilé ou vissé sur une section de la deuxième section filetée (17).

11. Procédé de montage d'un système de fixation avec les étapes suivantes :
- préparation d'un système de fixation selon les revendications 1 à 10, sachant que l'élément de fixation (10, 20) est introduit avec l'écrou (50) dans l'espace intérieur (36) de la douille (30) ,
- insertion ou vissage du système de fixation dans une enveloppe de bâtiment composée d'au moins un film de couverture (70), d'une couche d'isolation (71) et de tôle de support (72) (vu dans la direction du travail),
- perçage de la tôle de support (72) à l'aide de la pointe de perçage jusqu'à ce que la tôle de support (72) vienne buter sur la butée (18) et force l'élément de fixation (10, 20),
- blocage de l'écrou (50) au moyen d'un outil contre les mouvements de rotation de l'élément de fixation, l'écrou (50) se déplaçant de ce fait sur la deuxième section filetée (17) de l'élément de fixation (10) en direction de la pointe (13),
- mise en butée de l'écrou (50) sur la surface de butée (38) de la douille (30) et entraînement de ce fait de la douille par l'écrou (50) pendant la poursuite du mouvement de rotation de l'élément de fixation (10),
- fin du mouvement de rotation à l'atteinte de la profondeur de pose de la douille (30).

12. Procédé selon la revendication 11, **caractérisé en ce que** la direction d'entraînement de l'élément de fixation (10, 20) est conservée pendant toute l'opération de pose du système de fixation.
